# EUROPÄISCHE PATENTSCHRIFT

(11) **EP 2 809 155 B1**
(45) Veröffentlichungstag und Bekanntmachung des Hinweises auf die Patenterteilung: **06.04.2016**
(21) Anmeldenummer: 13702341.2
(22) Anmeldetag: 30.01.2013
(51) Int. Cl.: A01N 25/10, A01N 25/30, A01N 57/20, A01P 13/00, A01N 25/02, A01N 33/02, A01N 37/38, A01N 39/04

(54) **PESTIZID-ZUSAMMENSETZUNGEN**
PESTICIDE PREPARATIONS
COMPOSITIONS PESTICIDES

(30) Priorität: 04.02.2012 DE 102012002272
(43) Veröffentlichungstag der Anmeldung: 10.12.2014
(73) Patentinhaber: CLARIANT INTERNATIONAL LTD, 4132 Muttenz (CH)
(72) Erfinder: WACKER, Andreas, 68163 Mannheim (DE)
(74) Vertreter: Mikulecky, Klaus
(86) Internationale Anmeldenummer: PCT/EP2013/000279
(87) Internationale Veröffentlichungsnummer: WO 2013/113498

(56) Entgegenhaltungen:
- EP-A1- 1 905 302
- WO-A1-02/089575
- WO-A1-2010/123871
- WO-A2-2010/151622
- WO-A2-2011/029561

## Beschreibung

Die Erfindung betrifft wässrige, lagerstabile Pestizid-Zusammensetzungen, die Copolymere enthalten.

Pestizide (Akarizide, Bakterizide, Fungizide, Herbizide, Insektizide, Molluskide, Nematizide und Rodentizide) sind chemische oder natürliche Substanzen, die in Pflanzenzellen, -gewebe oder parasitären Organismen in oder auf der Pflanze eindringen und diese schädigen und/oder zerstören. Den größten Anteil an Pestiziden stellen Herbizide dar, gefolgt von Insektiziden und Fungiziden.

Pestizide werden üblicherweise in Form von flüssigen oder festen konzentrierten Zubereitungen (Formulierungen) eingesetzt, die dem Anwender die Handhabung erleichtern oder für eine höhere Wirksamkeit des Wirkstoffs sorgen. Die Formulierungen werden üblicherweise vor dem Einsatz mit Wasser verdünnt und anschließend durch Sprühapplikation ausgebracht.

Wasserlösliche Konzentrate (Soluble Liquids, abgekürzt mit SL) sind eine besonders wichtige Form der Pestizidzubereitungen. Sie spielen insbesondere bei Herbiziden eine große Rolle, wobei die Pestizide oftmals als wasserlösliche Alkali- oder Ammoniumsalze, die durch Neutralisation der Säureform der Herbizide mit geeigneten Basen erhalten werden, eingesetzt werden.

Durch die umfangreiche Verwendung von Herbiziden in der Landwirtschaft, vor allem seit Einführung der herbizid-resistenten genmodifizierten Nutzpflanzen, haben sich in den vergangenen Jahren verstärkt Populationen resistenter Unkräuter oder Gräser entwickelt, die mit einem Herbizid alleine nicht mehr bekämpft werden können. Eine Möglichkeit, dieses Problem in den Griff zu bekommen, ist der Einsatz von zwei oder mehreren Herbiziden gleichzeitig, die durch ihre unterschiedliche Wirkungsweise auch Unkräuter erfassen, die gegen ein bestimmtes Herbizid resistent sind.

Kombinationen von zwei oder mehreren Pestiziden werden in der Landwirtschaft oft als Mischung im Sprühtank, d. h. im sogenannten "Tank-Mix-Verfahren" eingesetzt. Dabei werden die einzelnen Formulierungen im Sprühtank mit Wasser gemischt und anschließend gemeinsam appliziert. Diese Vorgehensweise bringt gewisse Nachteile mit sich.

Zum einen können Kompatibilitätsprobleme auftreten, die dazu führen, dass es zum Abtrennen oder der Ausfällung von Pestizid oder anderer Formulierungsbestandteile kommt. Andererseits kann die Wirksamkeit der Pestizide in unerwünschter Art beeinflusst werden, indem beispielsweise in den jeweiligen Formulierungen enthaltene, aber zusammen nicht kompatible Adjuvants sich in der Wirkung aufheben oder verstärken, was sich in einer reduzierten Effektivität oder in einer ungewollten gesteigerten Wirksamkeit gegenüber Nutzpflanzen, die eine Pflanzenschädigung hervorrufen kann, äußert.

Um dieses Problem zu umgehen, werden verstärkt sogenannte Kombi-Formulierungen entwickelt, die die Besonderheiten der einzelnen verwendeten Pestizide berücksichtigen und aufeinander abgestimmte Inhaltsstoffe enthalten, um eine optimale Wirkungsweise und Pflanzensicherheit zu gewährleisten. Allerdings gestaltet sich diese Aufgabe oftmals schwierig, da gegebenenfalls nicht miteinander kompatible Wirkstoffe kombiniert werden müssen, was zwangsläufig die Gefahr von Inkompatibilitäten mit sich bringt. Dies äußert sich beispielsweise in der Form von Abtrennungen, Ausfällungen oder Verdickungen, welche die Formulierungen unbrauchbar machen. Besonders schwierig erweist sich die Kombination von zwei oder mehreren Wirkstoffen, die in Form ihrer wasserlöslichen Salze vorliegen, in einer stabilen SL-Formulierung.

WO 03/000055 beschreibt Pestizidzubereitungen, die ein Copolymer aus Glycerin, einer Carbonsäure und einer Dicarbonsäure als Adjuvant enthalten. Diese Copolymere erhöhen die Wirkung der Pestizide auf signifikante Weise und zeichnen sich durch ihre niedrige Toxizität und hohe Umweltverträglichkeit aus.

WO 2011/029561 beschreibt die Kombination eines Copolymers aus Glycerin, einer Carbonsäure und einer Dicarbonsäure zusammen mit amphoteren Tensiden als Adjuvants, beispielsweise in Glyphosat-Formulierungen.

WO 2005/87007A1 beschreibt Formulierungen die zu einem bestimmten Verhältnis aus Glyphosat und einem Auxin-Herbizid bestehen. Verschiedene Tenside können zur Herstellung dieser Zusammensetzungen eingesetzt werden, die Copolymere der Formel (I) werden nicht erwähnt.

WO 2010/102102A1 beschreibt die Verwendung von Alkylpolyglykosiden (APGs) zur Herstellung von stabilen elektrolytischen wässrigen Pestizidmischungen.

In WO 2010/123871A1 werden homogene bei einen bestimmten pH-Wert lagerstabile wässrige Herbizid-Zubereitungen von Glyphosat-Ammoniumsalzen und 2,4-D-Ammoniumsalzen beschrieben.

WO 2010/151622A2 lehrt die Kombination von Glyphosat-Salzen mit Dicamba-Salzen in wässrigen Formulierungen, die ebenfalls bei einem bestimmten pH-Wert lagerstabil sind.

Ein Nachteil der vorbeschriebenen Kombi-Formulierungen ist, dass oftmals Tenside verwendet werden, die nicht in der Lage sind, die heutigen strengen Anforderungen hinsichtlich der toxikologischen und ökotoxikologischen Unbedenklichkeit, wie beispielsweise reduzierte Augenreizung, zu erfüllen.

Es stellte sich die Aufgabe, lagerstabile wässrige Pestizidzusammensetzungen zu entwickeln, die mindestens zwei wasserlösliche Pestizide enthalten und auf einem toxikologisch und ökotoxikologisch bevorzugten Tensid-System mit reduzierter Augenreizung basieren, das gleichzeitig in der Lage ist, die biologische Wirksamkeit der enthaltenen Pestizide zu erhöhen.

Überraschenderweise wird die Aufgabe dadurch gelöst, dass die Pestizidzusammensetzung ein oder mehrere Copolymere, erhältlich durch Copolymerisation von Glycerin, mindestens einer Dicarbonsäure und mindestens einer Monocarbonsäure enthält.

Gegenstand der Erfindung sind Zusammensetzungen enthaltend
a) mindestens zwei wasserlösliche Pestizide mit einer Wasserlöslichkeit bei 25°C von mindestens 50 g/l,
b) ein oder mehrere Copolymere, erhältlich durch Copolymerisation von
   i) Glycerin,
   ii) mindestens einer Dicarbonsäure und
   iii) mindestens einer Monocarbonsäure und
c) Wasser
d) optional ein Co-Solvens.

Unter wasserlöslichen Pestiziden im Sinne der Erfindung werden Pestizide verstanden, die bei Raumtemperatur (25 °C) eine Löslichkeit von mindestens 50 g/l, bevorzugt mindestens 100 g/l in Wasser aufweisen.

Geeignete wasserlösliche Pestizide sind bevorzugt die wasserlöslichen Salze von Herbiziden mit einer Säurefunktion wie Acifluorfen, Aminopyralid, Amitrol, Asulam, Benazolin, Bentazon, Bialaphos, Bispyribac, Bromacil, Bromoxynil, Bicyclopyron, Chloramben, Clopyralid, 2,4-D, 2,4-DB, Dicamba, Dichlorprop, Difenzoquat, Diquat, Endothal, Fenoxaprop, Flamprop, Flumiclorac, Fluoroglycofen, Fomesafen, Fosamine, Glufosinat, Glyphosat, Imizameth, Imazamethabenz, Imazamox, Imazapic, Imazapyr, Imazaquin, Imazethapyr, MCPA, MCPB, Mecoprop, Octansäure, Paraquat, Pelargonsäure, Picloram, Quizalofop, 2,3,6-TBA und Triclopyr.

Besonders bevorzugt handelt es sich dabei um die wasserlöslichen Salze von 2,4-D, Bentazon, Dicamba, Fomesafen, Glyphosat, Glufosinat, MCPA und Paraquat.

Unter den wasserlöslichen Salzen sind insbesondere die Alkali- und Ammoniumsalze und unter diesen wiederum die Kalium-, Ammonium-, Dimethylammonium-, iso-Propylammonium- und die (2-Hydroxyethyl)trimethylammoniumsalze bevorzugt.

Ganz besonders bevorzugt als Komponente a) in der Zusammensetzung sind Kombinationen aus genau zwei wasserlöslichen Herbiziden.

Unter diesen Zweierkombinationen sind wiederum jeweils Glyphosat und 2,4-D, Glyphosat und Dicamba, Glyphosat und Fomesafen, Glyphosat und Glufosinat, 2,4-D und Dicamba, Glufosinat und 2,4-D, sowie Glufosinat und Dicamba bevorzugt und außerordentlich bevorzugt jeweils Glyphosat und 2,4-D sowie Glyphosat und Dicamba.

Das Verhältnis der zwei wasserlöslichen Herbizide in diesen Zusammensetzungen liegt bevorzugt zwischen 9:1 und 1:9, besonders bevorzugt bei 8:2 bis 2:8 und insbesondere bevorzugt bei 7:3 bis 3:7. Diese Angaben beziehen sich auf die Säureäquivalente der wasserlöslichen Herbizide.

Zur Herstellung der erfindungsgemäßen Pestizidzusammensetzung können die Pestizide der Komponente a) entweder als in Wasser gelöstem Salz eingesetzt werden oder das unlösliche säureförmige Herbizid wird als solches eingesetzt und erst durch Zugabe einer geeigneten Base in das wasserlösliche Salz überführt. Die Herstellung solcher Zusammensetzungen auf beiden Wegen ist dem Fachmann hinlänglich bekannt.

Die erfindungsgemäßen Zubereitungen eignen sich beispielsweise zur Behandlung von Unkräutern bzw. Gräsern, u. a. zur Verwendung in Kulturen von gegen mehr als einem Herbizid resistenten Nutzpflanzen, sogenannten multiherbizidresistenten genmodifizierten Pflanzen.

Bevorzugte Copolymere der Komponente b) sind erhältlich durch Copolymerisation von
i) Glycerin
ii) mindestens einer Dicarbonsäure und
iii) mindestens einer Monocarbonsäure gemäß Formel (I)

   R¹-COOH (I),

   wobei R¹ (C₅-C₂₉)-Alkyl; (C₇-C₂₉)-Alkenyl; Phenyl oder Naphthyl ist,
und enthalten 19,9 bis 99 Gew.-% der Komponente i), 0,1 bis 30 Gew.-% der Komponente ii) und 0,9 bis 80 Gew.-% der Komponente iii).

Bevorzugte Dicarbonsäuren der Komponente ii) sind ausgewählt aus aromatischen Dicarbonsäuren. Besonders bevorzugte Dicarbonsäuren der Komponente ii) sind ausgewählt aus Phthalsäure, Terephthalsäure oder iso-Phthalsäure.

Bevorzugte Monocarbonsäuren der Komponente iii) sind ausgewählt aus Monocarbonsäuren der Formel (I) (Formel R¹-COOH), worin R¹ vorzugsweise eine Alkyl- oder Alkenylgruppe und besonders bevorzugt eine lineare Alkyl- oder Alkenylgruppe ist. Weiterhin bevorzugt besitzt R¹ in den Monocarbonsäuren der Formel (I), sofern es eine Alkyl- oder Alkenylgruppe ist, 8 bis 22 Kohlenstoffatome. Insbesondere bevorzugt sind die Monocarbonsäuren der Formel (I), worin R¹ ein Fettalkyl-Rest mit 8 bis 22 Kohlenstoffatomen ist. Außerordentlich bevorzugt sind die Monocarbonsäuren der Formel (I) ausgewählt aus Kokosfettsäure oder Talgfettsäure.

Die Herstellung der Copolymere der Komponente b) ist beispielsweise beschrieben in EP 1 379 129 und WO 03/000055.

Mit den Copolymeren der Komponente b) lassen sich wässrige Pestizid-Zusammensetzungen von mindestens zwei wasserlöslichen Pestiziden mit ausgezeichneter Lagerstabilität herstellen. Außerdem ist die Augenreizung der Formulierung durch die Verwendung der Copolymere der Komponente b) gegenüber dem Stand der Technik deutlich reduziert. Die Copolymere der Komponente b) wirken auch als Adjuvant und erhöhen die biologische Wirksamkeit der in der Zusammensetzung enthaltenen Pestizide der Komponente a). Weitere anwendungstechnische Vorteile sind beispielsweise die niedrige Viskosität sowie das gute Löslichkeitsverhalten in Wasser.

Bei dem optional enthaltenen Co-Solvens d) kann es sich um ein einziges Lösemittel oder ein Gemisch zweier oder mehrerer Lösemittel handeln. Dazu eignen sich alle polaren Lösemittel, die mit der wässrigen Pestizidzusammensetzung kompatibel sind und eine homogene Phase bilden. Geeignete Co-Solventien sind beispielsweise einwertige Alkohole, wie Methanol, Ethanol, Propanole, Butanole, Benzylalkohol oder mehrwertige Alkohole wie Ethylenglykol, Diethylenglykol, Propylenglykol oder Glycerin oder Polyglykole wie Polyethylen-, Polypropylen- oder gemischte Polyalkylenglykole (PAGs). Weitere geeignete Lösemittel sind Ether wie beispielsweise Propylenglykolmono- oder dimethylether, Dipropylenglykolmono- oder dimethylether, Amide wie beispielsweise N-Methyl- oder N-Ethylpyrrolidon, Milchsäure-, Capryl- oder Decansäuredimethylamid.

Besonders geeignete Co-Solventien sind ein oder mehrwertige Alkohole und insbesondere geeignet sind zwei- oder dreiwertige Alkohole wie Propylenglykol, Glycerin oder Polyethylen-, Polypropylen- bzw. gemischte Polyalkylenglykole (PAGs).

Die Co-Solventien können zusätzlich zur Stabilisierung der Zusammensetzung beitragen, indem sie beispielsweise die Kälte- oder Wärmestabilität erhöhen oder weitere anwendungstechnische Eigenschaften wie die Viskosität positiv beeinflussen.

Der Anteil der Co-Solventien in der Zusammensetzung beträgt üblicherweise 10 bis 250 g/l, bevorzugt 20 bis 200 g/l und besonders bevorzugt 30 bis 150 g/l. Die Copolymere der Komponente b) ermöglichen die Herstellung von besonders hoch beladenen wässrigen Formulierungen, sogenannten "High-Load-Formulierungen"'.

In einer Ausführungsform der Erfindung enthält die erfindungsgemäße Zusammensetzung die Pestizide der Komponente a) daher in einer Gesamtmenge größer als 100 g/l, bevorzugt größer als 200 g/l und besonders bevorzugt größer als 300 g/l. Diese Mengenangaben beziehen sich auf die gesamte erfindungsgemäße Zusammensetzung, auf die Summe der Pestizide und im Falle von Pestiziden, die in Form ihrer wasserlöslichen Salze eingesetzt werden, auf die Menge an freier Säure, dem sogenannten Säureäquivalent ("acid equivalent", a.e.).

In einer weiteren bevorzugten Ausführungsform der Erfindung beträgt die Menge der Komponente b) in den erfindungsgemäßen Zusammensetzungen 20 bis 250 g/l und bevorzugt 50 bis 200 g/l. Diese Mengenangaben beziehen sich auf die gesamte erfindungsgemäße Zusammensetzung.

Üblicherweise werden die Copolymere der Komponente b) in Form von Lösungen eingesetzt. Zur Klarstellung sei hier erwähnt, dass sich die oben genannten Mengenangaben dabei auf den Aktivgehalt der Copolymere der Formel (I) in der Lösung beziehen.

Ein wichtiges Kriterium für die Lagerstabilität von SL-Formulierungen ist deren Phasenstabilität. Dabei ist vor allem der Temperaturbereich, in dem eine SL-Formulierung phasenstabil ist, von Bedeutung. Die obere Grenze der Phasenstabilität ist der sogenannte Trübungspunkt. Es handelt sich hierbei um die Temperatur, bis zu der eine wässrige Formulierung ohne Phasentrennung erwärmt werden kann. Bis zum Erreichen des Trübungspunktes liegen in der SL-Formulierung die Tenside und die gelösten Pestizide in definierten Konzentrationen als klare homogene Lösung vor. Beim Erwärmen auf Temperaturen oberhalb des Trübungspunktes trübt die zuvor transparente Formulierung zunächst ein, das Tensid trennt sich von der Lösung und beim Stehen lassen kommt es zur Phasenseparation.

Der Trübungspunkt einer Zusammensetzung wird typischerweise bestimmt, indem man die Lösung bis zum Auftreten einer Trübung erwärmt. Im Anschluss daran lässt man die Zusammensetzung unter Rühren und stetiger Temperaturkontrolle abkühlen. Die Temperatur, bei der die eingetrübte Lösung wieder aufklart, wird als Messwert des Trübungspunkts dokumentiert.

Die untere Grenze der Phasenstabilität ist vor allem bei Lagerung in der Kälte, wie zum Beispiel im Winter von Bedeutung. Auch beim Unterschreiten der unteren Grenze der Phasenstabilität kann es zur Phasenseparation oder zu Ausfällungen oder Auskristallisation kommen.

Die erfindungsgemäßen Zusammensetzungen zeichnen sich dadurch aus, dass sie auch bei einer Temperatur von vorzugsweise größer 55 °C, besonders bevorzugt von größer 70 °C und insbesondere bevorzugt von größer 80 °C phasenstabil sind.

Außerdem zeichnen sich die erfindungsgemäßen Zusammensetzung dadurch aus, dass sie auch bei einer Temperatur von vorzugsweise kleiner 10 °C, besonders bevorzugt von kleiner 0 °C und insbesondere bevorzugt von kleiner -10 °C phasenstabil sind.

Die Zusammensetzungen werden in Form von Spritzbrühen auf die Felder ausgebracht. Dabei wird die Spritzbrühe durch Verdünnung der Konzentrat-Formulierung mit einer definierten Menge Wasser hergestellt.

Die erfindungsgemäßen Zusammensetzungen können zusätzlich weitere Tenside, Konservierungsmittel, Adjuvants, Entschäumer oder funktionelle Polymere enthalten.

Bei den Tensiden kann es sich generell um alle mit der Zusammensetzung kompatiblen nichtionischen, amphoteren, kationischen oder anionische Tenside handeln. Die Tenside können zusätzlich die Stabilität der Zusammensetzung erhöhen oder biologische Wirksamkeit steigern.

Beispiele für nicht-ionische Tenside sind Ethoxylate und Alkoxylate von längerkettigen aliphastischen oder aromatischen Alkoholen, Fettaminethoxylate, längerkettige Etheraminalkoxylate, (gegebenenfalls ethoxylierte) Sorbitanester, Alkylpolyglycoside. Geeignete amphotere Tenside sind u. a. langkettige Alkyldimethylbetaine oder Alkyldimethylaminoxide, oder Alkyldimethylaminamidopropylaminoxide. Unter den anionischen Tensiden sind beispielsweise Ethersulfate von ethoxylierten Fettalkoholen, Umsetzungsprodukte von (gegebenenfalls ethoxylierten) langkettigen Alkoholen mit Phosphorsäurederivaten geeignet. Unter langkettig werden lineare oder verzweigte Kohlenwasserstoffketten mit mindestens 6 und maximal 22 Kohlenstoffatomen geeignet.

Als Konservierungsmittel eignen sich organische Säuren und ihre Ester, beispielsweise Ascorbinsäure, Ascorbinpalmitat, Sorbat, Benzoesäure, Methyl- und Propyl-4-hydroxybenzoat, Propionate, Phenol, beispielsweise 2-Phenylphenat, 1,2-Benzisothiazolin-3-on, Formaldehyd, schwefelige Säure und deren Salze.

Zudem können die Zusammensetzungen weitere Adjuvants enthalten, die die biologische Wirksamkeit weiter steigen. Geeignete Verbindungen sind aus der Literatur als Adjuvants in wässrigen Pestizid-Zusammensetzungen bekannt und beispielsweise in der WO2009/029561 beschrieben.

Als Entschäumer eignen sich Fettsäurealkylesteralkoxylate, Organopolysiloxane wie Polydimethylsiloxane und deren Gemische mit mikrofeiner, gegebenenfalls silanierter Kieselsäure, Perfluoralkylphosphonate und -phosphinate; Paraffine; Wachse und Mikrokristallinwachse und deren Gemische mit silanierter Kieselsäure. Vorteilhaft sind auch Gemische verschiedener Schauminhibitoren, beispielsweise solche aus Silikonöl, Paraffinöl und/oder Wachsen.

Bei den funktionellen Polymeren, die in der Zusammensetzung enthalten sein können, handelt es sich hochmolekulare Verbindungen synthetischen oder natürlichen Ursprungs mit einer Molmasse von größer als 10.000. Die funktionellen Polymere können beispielsweise als Anti-Drift-Agent wirken oder die Regenfestigkeit steigern.

Der pH-Wert der Zusammensetzungen liegt üblicherweise im Bereich von 3,5 bis 8,0, bevorzugt bei 4,0 bis 7,0 und besonders bevorzugt bei 4,5 bis 6,5 (gemessen als 1 Gew.-%ige wässrige Verdünnung). Der pH-Wert wird primär bestimmt durch die pH-Werte der Lösungen der wässrigen Pestizide, die als Salze schwacher Säuren vorliegen. Durch Zugabe von Säuren oder Basen kann der pH-Wert auf einen anderen Wert abweichend von dem ursprünglichen pH-Wert der Mischung eingestellt werden.

Die hohe Salzstabilität der erfindungsgemäßen Zusammensetzungen im wässrigen Medium auch bei hoher Pestizid- und Salzkonzentration stellt einen großen anwendungstechnischen Vorteil dar. Dies ermöglicht es auch, agrochemische Salze wie beispielsweise Dünger in die Zusammensetzungen mit aufzunehmen.

In einer weiteren bevorzugten Ausführungsform der Erfindung enthalten die Zusammensetzungen daher ein oder mehrere agrochemische Salze, bevorzugt Ammoniumsalze.

Besonders bevorzugt enthalten die Zusammensetzungen Ammoniumsulfat, Ammoniumnitrat, Ammoniumphosphat, Ammoniumthiocyanat und/oder Ammoniumchlorid.

In einer weiteren bevorzugten Ausführungsform der Erfindung liegen die erfindungsgemäßen Zusammensetzungen als Konzentrat-Formulierungen, die vor dem Gebrauch verdünnt werden, insbesondere mit Wasser (beispielsweise "ready-to-use"-, "in-can"- oder "built-in"-Formulierungen) vor und enthalten das eine oder die mehreren wasserlöslichen Pestizide der Komponente a) in Mengen von 5 bis 80 Gew.-%, bevorzugt von 10 bis 70 Gew.-% und besonders bevorzugt von 20 bis 60 Gew.-% und die eine oder die mehreren Copolymere der Komponente b) in Mengen von 1 bis 25 Gew.-%, bevorzugt von 2 bis 20 Gew.-% und besonders bevorzugt von 3 bis 15 Gew.-%. Diese Mengenangaben beziehen sich auf die gesamte Konzentrat-Formulierung und im Falle von Pestiziden, die in Form ihrer wasserlöslichen Salze eingesetzt werden, auf die Menge an freier Säure, dem sogenannten Säureäquivalent ("acid equivalent", a.e.).

Die erfindungsgemäßen Zusammensetzungen werden vorzugsweise in Form von Spritzbrühen auf die Felder ausgebracht. Dabei werden die Spritzbrühen durch Verdünnung von Konzentrat-Formulierungen mit einer definierten Menge Wasser hergestellt.

In einer weiteren bevorzugten Ausführungsform der Erfindung liegen die erfindungsgemäßen Zusammensetzungen als Spritzbrühen vor und enthalten 0,001 bis 10 Gew.-%, bevorzugt 0,02 bis 3 Gew.-% und besonders bevorzugt 0,025 bis 2 Gew.-% des einen oder der mehreren wasserlöslichen Pestizide der Komponente a) und 0,001 bis 3 Gew.-%, bevorzugt 0,005 bis 1 Gew.-% und besonders bevorzugt 0,01 bis 0,5 Gew.-% der einen oder mehreren Copolymere der Komponente b). Die genannten Mengenangaben beziehen sich auf die gesamte Spritzbrühe und im Falle von Pestiziden, die in Form ihrer wasserlöslichen Salze eingesetzt werden, auf die Menge an freier Säure, dem sogenannten Säureäquivalent ("acid equivalent", a.e.).

Die Erfindung betrifft weiterhin die Verwendung der erfindungsgemäßen Zusammensetzungen zur Kontrolle und/oder Bekämpfung von Unkraut, Pilzerkrankungen oder Insektenbefall. Bevorzugt ist die Verwendung der erfindungsgemäßen Zusammensetzungen zur Kontrolle und/oder Bekämpfung von Unkraut.

### Beispiele

Im Folgenden wird die Erfindung anhand von Beispielen verdeutlicht, die jedoch keinesfalls als Einschränkung anzusehen sind.

### Beispiel 1

Verschiedene Pestizid-Zusammensetzungen (siehe Tabelle 2) werden durch Mischen einer handelsüblichen wässrigen Lösung von Glyphosat-Isopropylammonium-Salz (mit 62 Gew.-% Wirkstoff) und einer handelsüblichen wässrigen Lösung von 2,4-D-Dimethylammonium-Salz (mit 69 Gew.-% Wirkstoff) und weiteren Hilfsstoffen sowie Wasser hergestellt. Die Formulierungen enthalten 300 g/l Glyphosat-Säureäquivalent und 100 g/l 2,4-D-Säureäquivalent. Eine Übersicht der verwendeten Adjuvants findet sich in Tabelle 1.

**Tabelle 1: Übersicht der Adjuvants A1 bis A7**

| Adjuvant | Zusammensetzung |
|---|---|
| A1 (erfindungsgemäß) | Synergen^{®} GL 5 (Copolymer bestehend aus Glycerin, Kokosfettsäure und Phthalsäure; Produkt der Firma Clariant), 70 Gew.-%ige Lösung in Wasser |
| A2 (Vergleich) | Agnique^{®} AG 8107 (C_{8/10}-Alkylpolyglycosid; Produkt der Firma Cognis), 70 Gew.-%ige Lösung in Wasser |
| A3 (Vergleich) | Genamin^{®} T 150 (Talgfettaminethoxylat mit 15 mol EO; Produkt der Firma Clariant), ca. 100 Gew.-%ig |
| A4 (Vergleich) | Genamin^{®} C 050 (Kokosfettaminethoxylat mit 5 mol EO; Produkt der Firma Clariant), ca. 100 Gew.-%ig |
| A5 (Vergleich) | Genagen^{®} KB (C_{12/14}-Alkyldimethylbetain; Produkt der Firma Clariant), 30 Gew.-%ige Lösung in Wasser |
| A6 (Vergleich) | Synergen^{®} 9903 (Alkylamido-N-[3-(dimethylamino)propyl], N-oxid; Produkt der Firma Clariant), 30 Gew.-%ige Lösung in Wasser |
| A7 (Vergleich) | Genaminox^{®} LA (C_{12/14}-Alkyldimethylaminoxid; Produkt der Firma Clariant), 30 Gew.-%ige Lösung in Wasser |

**Tabelle 2: Glyphosat-2,4-D-Kombi-Formulierungen (300 + 100 g/l a.e.)**

| Versuch | Glyphosat-IPA (62 Gew.-%ig in Wasser) | 2,4-D DMA (69 Gew.-%ig in Wasser) | Adjuvant | Adjuvant-Menge | Propylenglykol | Wasser |
|---|---|---|---|---|---|---|
| | [g] | [g] | | [g] | [g] | [g] |
| E1-1 | 35,9 | 9,5 | A1 | 13,9 | 5,0 | 1,0 |
| V1-1 | 35,9 | 9,5 | ohne | 0 | 5,0 | 14,9 |
| V2-1 | 35,9 | 9,5 | A2 | 13,9 | 5,0 | 1,0 |
| V3-1 | 35,9 | 9,5 | A3 | 4,5 | 5,0 | 5,1 |
| V4-1 | 35,9 | 9,5 | A4 | 4,5 | 5,0 | 5,1 |
| V5-1 | 35,9 | 9,5 | A5 | 15 | 5,0 | 0 |
| V6-1 | 35,9 | 9,5 | A6 | 15 | 5,0 | 0 |
| V7-1 | 35,9 | 9,5 | A7 | 15 | 5,0 | 0 |

Von allen Formulierungen wird die Phasenstabilität durch Bestimmung des Trübungspunktes sowie der Kältestabilität bei 0 °C und -10 °C ermittelt. Die Ergebnisse sind in Tabelle 3 dargestellt.

**Tabelle 3: Trübungspunkte und Kältestabilität der Zusammensetzungen E1-1 bis V7-1**

| Versuch | Trübungspunkt [°C] | Aussehen bei 25 °C | Aussehen bei 0 °C | Aussehen bei -10 °C |
|---|---|---|---|---|
| E1-1 | > 95 | homogen | homogen | homogen |
| V1-1 | > 95 | homogen | trennt | trennt |
| V2-1 | > 95 | homogen | homogen | homogen |
| V3-1 | nicht bestimmt | trennt | trennt | trennt |
| V4-1 | nicht bestimmt | trennt | trennt | trennt |
| V5-1 | > 95 | homogen | kristallisiert | kristallisiert |
| V6-1 | > 95 | homogen | homogen | homogen |
| V7-1 | nicht bestimmt | trennt | homogen | trennt |

### Beispiel 2

Verschiedene Pestizid-Zusammensetzungen (siehe Tabelle 4) werden durch Mischen einer handelsüblichen wässrigen Lösung von Glyphosat-Isopropylammonium-Salz (mit 62 Gew.-% Wirkstoff) und einer handelsüblichen wässrigen Lösung von 2,4-D-Dimethylammonium-Salz (mit 69 Gew.-% Wirkstoff) und weiteren Hilfsstoffen sowie Wasser hergestellt. Die Formulierungen enthalten 200 g/l Glyphosat-Säureäquivalent und 200 g/l 2,4-D-Säureäquivalent.

**Tabelle 4: Glyphosat-2,4-D-Kombi-Formulierungen (200 + 200 g/l a.e.)**

| Versuch | Glyphosat-IPA (62 Gew.-%ig in Wasser) | 2,4-D DMA (69 Gew.-%ig in Wasser) | Adjuvant | Adjuvant-Menge | Propylenglykol | Wasser |
|---|---|---|---|---|---|---|
| | [g] | [g] | | [g] | [g] | [g] |
| E1-2 | 24,0 | 19,0 | A1 | 7,5 | 5,0 | 11,5 |
| V1-2 | 24,0 | 19,0 | ohne | 0 | 5,0 | 19,0 |
| V2-2 | 24,0 | 19,0 | A2 | 7,5 | 5,0 | 11,5 |
| V3-2 | 24,0 | 19,0 | A3 | 5,3 | 5,0 | 13,7 |
| V4-2 | 24,0 | 19,0 | A4 | 5,3 | 5,0 | 13,7 |
| V5-2 | 24,0 | 19,0 | A5 | 19 | 5,0 | 0 |
| V6-2 | 24,0 | 19,0 | A6 | 19 | 5,0 | 0 |
| V7-2 | 24,0 | 19,0 | A7 | 19 | 5,0 | 0 |

Von allen Formulierungen wird die Phasenstabilität durch Bestimmung des Trübungspunktes sowie der Kältestabilität bei 0 °C und -10 °C ermittelt. Die Ergebnisse sind in Tabelle 3 dargestellt.

**Tabelle 5: Trübungspunkte und Kältestabilität der Zusammensetzungen E1-2 bis V7-2**

| Versuch | Trübungspunkt [°C] | Aussehen bei 25 °C | Aussehen bei 0 °C | Aussehen bei -10 °C |
|---|---|---|---|---|
| E1-2 | > 95 | homogen | homogen | homogen |
| V1-2 | > 95 | homogen | trennt | trennt |
| V2-2 | > 95 | homogen | homogen | homogen |
| V3-2 | nicht bestimmt | trennt | trennt | trennt |
| V4-2 | nicht bestimmt | trennt | trennt | trennt |
| V5-2 | > 95 | homogen | kristallisiert | kristallisiert |
| V6-2 | > 95 | homogen | homogen | trennt |
| V7-2 | nicht bestimmt | trennt | trennt | trennt |

### Beispiel 3

Verschiedene Pestizid-Zusammensetzungen (siehe Tabelle 6) werden durch Mischen einer handelsüblichen wässrigen Lösung von Glyphosat-Isopropylammonium-Salz (mit 62 Gew.-% Wirkstoff) und einer handelsüblichen wässrigen Lösung von 2,4-D-Dimethylammonium-Salz (mit 69 Gew.-% Wirkstoff) und weiteren Hilfsstoffen sowie Wasser hergestellt. Die Formulierungen enthalten 100 g/l Glyphosat-Säureäquivalent und 300 g/l 2,4-D-Säureäquivalent.

**Tabelle 6: Glyphosat-2,4-D-Kombi-Formulierungen (100 + 300 g/l a.e.)**

| Versuch | Glyphosat-IPA (62 Gew.-%ig in Wasser) | 2,4-D DMA (69 Gew.-%ig in Wasser) | Adjuvant | Adjuvant-Menge | Propylenglykol | Wasser |
|---|---|---|---|---|---|---|
| | [g] | [g] | | [g] | [g] | [g] |
| E1-3 | 12,0 | 28,6 | A1 | 6,5 | 5,0 | 11,5 |
| V1-3 | 12,0 | 28,6 | ohne | 0 | 5,0 | 19,0 |
| V2-3 | 12,0 | 28,6 | A2 | 6,5 | 5,0 | 11,5 |
| V3-3 | 12,0 | 28,6 | A3 | 4,6 | 5,0 | 13,7 |
| V4-3 | 12,0 | 28,6 | A4 | 4,6 | 5,0 | 13,7 |
| V5-3 | 12,0 | 28,6 | A5 | 15,2 | 5,0 | 6,2 |
| V6-3 | 12,0 | 28,6 | A6 | 15,2 | 5,0 | 6,2 |
| V7-3 | 12,0 | 28,6 | A7 | 15,2 | 5,0 | 6,2 |

Von allen Formulierungen wird die Phasenstabilität durch Bestimmung des Trübungspunktes sowie der Kältestabilität bei 0°C und -10°C ermittelt. Die Ergebnisse sind in Tabelle 7 dargestellt.

**Tabelle 7: Trübungspunkte und Kältestabilität der Zusammensetzungen E1-3 bis V7-3**

| Versuch | Trübungspunkt [°C] | Aussehen bei 25 °C | Aussehen bei 0 °C | Aussehen bei -10 °C |
|---|---|---|---|---|
| E1-2 | > 95 | homogen | homogen | homogen |
| V1-2 | > 95 | homogen | homogen | homogen |
| V2-2 | > 95 | homogen | homogen | homogen |
| V3-2 | > 95 | homogen | homogen | homogen |
| V4-2 | > 95 | homogen | homogen | homogen |
| V5-2 | nicht bestimmt | fällt aus | fällt aus | fällt aus |
| V6-2 | > 95 | homogen | homogen | homogen |
| V7-2 | > 95 | homogen | homogen | homogen |

Dier Ergebnisse der Versuche zeigen, dass die erfindungsgemäßen Pestizid-Zusammensetzungen, die das Copolymer der Komponente b) enthalten, über einen breiten Bereich der Mischungsverhältnisse deutlich stabiler sind als analoge Zusammensetzungen, die auf anderen Produkten basieren, wie sie üblicherweise in wässrigen Pestizid-Zusammensetzungen eingesetzt werden.

## Patentansprüche

1. Zusammensetzung enthaltend
a) mindestens zwei wasserlösliche Pestizide mit einer Wasserlöslichkeit bei 25°C von mindestens 50 g/l,
b) ein oder mehrere Copolymere, erhältlich durch Copolymerisation von
i) Glycerin,
ii) mindestens einer Dicarbonsäure und
iii) mindestens einer Monocarbonsäure,
c) Wasser, und
d) ein Co-Solvens.

2. Zusammensetzung gemäß Anspruch 1, **dadurch gekennzeichnet, dass** die wasserlöslichen Pestizide der Komponente a) ausgewählt sind aus der Gruppe der wasserlöslichen Herbizide, und bevorzugt aus den wasserlöslichen Salzen von Acifluorfen, Aminopyralid, Amitrol, Asulam, Benazolin, Bentazon, Bialaphos, Bispyribac, Bromacil, Bromoxynil, Bicyclopyron, Chloramben, Clopyralid, 2,4-D, 2,4-DB, Dicamba, Dichlorprop, Difenzoquat, Diquat, Endothal, Fenoxaprop, Flamprop, Flumiclorac, Fluoroglycofen, Fomesafen, Fosamine, Glufosinat, Glyphosat, Imizameth, Imazamethabenz, Imazamox, Imazapic, Imazapyr, Imazaquin, Imazethapyr, MCPA, MCPB, Mecoprop, Octansäure, Paraquat, Pelargonsäure, Picloram, Quizalofop, 2,3,6-TBA und Triclopyr.

3. Zusammensetzung gemäß Anspruch 1 oder 2, **dadurch gekennzeichnet, dass** die wasserlöslichen Pestizide der Komponente a) ausgewählt sind aus den wasserlöslichen Salzen von 2,4-D, Bentazon, Dicamba, Fomesafen, Glyphosat, Glufosinat, MCPA und Paraquat.

4. Zusammensetzung gemäß Anspruch 1 bis 3, **dadurch gekennzeichnet, dass** es sich bei der Komponente a) um genau zwei wasserlösliche Pestizide handelt.

5. Zusammensetzung gemäß Anspruch 4, **dadurch gekennzeichnet, dass** es sich bei den wasserlöslichen Pestiziden der Komponente a) um die Kombinationen der zwei Herbizide Glyphosat und 2,4-D, Glyphosat und Dicamba, Glyphosat und Fomesafen, Glyphosat und Glufosinat, 2,4-D und Dicamba, Glufosinat und 2,4-D, oder Glufosinat und Dicamba und insbesonders bevorzugt um Glyphosat und 2,4-D oder Glyphosat und Dicamba handelt.

6. Zusammensetzung gemäß Anspruch 4 bis 5, **dadurch gekennzeichnet, dass** das Verhältnis der zwei wasserlöslichen Herbizide in diesen Kombinationen zwischen 9:1 und 1:9, bevorzugt zwischen 8:2 und 2:8 und besonders bevorzugt zwischen 7:3 und 3:7 bezogen auf die Säureäquivalente der beiden wasserlöslichen Herbizide liegt.

7. Zusammensetzung gemäß Anspruch 1 bis 6, **dadurch gekennzeichnet, dass** das eine oder die mehreren Copolymere der Komponente b) ausgewählt sind aus Copolymeren, die erhältlich sind durch Copolymerisation von
i) Glycerin,
ii) mindestens einer Dicarbonsäure und
iii) mindestens einer Monocarbonsäure gemäß Formel (I)
R¹-COOH (I),
wobei R¹ (C₅-C₂₉)-Alkyl; (C₇-C₂₉)-Alkenyl; Phenyl oder Naphthyl ist, und 19,9 bis 99 Gew. % der Komponente i), 0,1 bis 30 Gew. % der Komponente ii) und 0,9 bis 80 Gew. % der Komponente iii) enthalten.

8. Zusammensetzung gemäß Anspruch 1 bis 7, **dadurch gekennzeichnet, dass** das Co-Solvens d) ein polares Lösungsmittel ist, das mit der wässrigen Pestizidzusammensetzung kompatibel ist und eine homogene Phase bildet.

9. Zusammensetzung gemäß einem oder mehreren der Ansprüche 1 bis 8, **dadurch gekennzeichnet, dass** die Gesamtmenge der Pestizide der Komponente a) in der Zusammensetzung größer als 100 g/l, bevorzugt größer als 200 g/l und besonders bevorzugt größer als 300 g/l bezogen auf deren Säureäquivalent beträgt.

10. Zusammensetzung gemäß einem oder mehreren der Ansprüche 1 bis 9, **dadurch gekennzeichnet, dass** die Menge der Copolymere der Komponente b) in der Zusammensetzung von 20 bis 250 g/l und bevorzugt von 50 bis 200 g/l beträgt.

11. Zusammensetzung gemäß einem oder mehreren der Ansprüche 1 bis 10, **dadurch gekennzeichnet, dass** sie bei einer Temperatur von größer 55°C, bevorzugt von größer 70°C und besonders bevorzugt von größer 80°C phasenstabil ist.

12. Zusammensetzung gemäß einem oder mehreren der Ansprüche 1 bis 11, **dadurch gekennzeichnet, dass** sie bei einer Temperatur von kleiner 10°C, bevorzugt von kleiner 0°C und besonders bevorzugt von kleiner -10°C phasenstabil ist.

13. Zusammensetzung gemäß einem oder mehreren der Ansprüche 1 bis 12, **dadurch gekennzeichnet, dass** sie ein oder mehrere agrochemische Salze, bevorzugt Ammonium- oder Kaliumsalze enthält.

14. Zusammensetzung gemäß einem oder mehreren der Ansprüche 1 bis 13, **dadurch gekennzeichnet, dass** sie als Konzentrat-Formulierung, die vor dem Gebrauch verdünnt wird, vorliegt, und 5 bis 80 Gew. %, bevorzugt 10 bis 70 Gew. % und besonders bevorzugt 20 bis 60 Gew. % des einen oder der mehreren wasserlöslichen Pestizide der Komponente a) und 1 bis 25 Gew. %, bevorzugt 2 bis 20 Gew. % und besonders bevorzugt 3 bis 15 Gew. % der einen oder der mehreren Copolymere der Komponente b) enthält.

15. Zusammensetzung gemäß einem oder mehreren der Ansprüche 1 bis 14, **dadurch gekennzeichnet, dass** sie sie als Spritzbrühe vorliegt und 0,001 bis 10 Gew. %, bevorzugt 0,02 bis 3 Gew. % und besonders bevorzugt 0,025 bis 2 Gew. % des einen oder der mehreren wasserlöslichen Pestizide der Komponente a) und 0,001 bis 3 Gew. %, bevorzugt 0,005 bis 1 Gew. % und besonders bevorzugt 0,01 bis 0,5 Gew. % der einen oder der mehreren Copolymere der Komponente b) enthält.

16. Verwendung einer Zusammensetzung nach einem oder mehreren der Ansprüche 1 bis 15 zur Kontrolle und/oder Bekämpfung von Unkraut, Pilzerkrankungen oder Insektenbefall, vorzugsweise zur Kontrolle und/oder Bekämpfung von Unkraut.

## Claims

1. A composition comprising
a) at least two water-soluble pesticides having a water-solubility at 25°C of at least 50 g/l,
b) one or more copolymers obtainable by copolymerizing
i) glycerol,
ii) at least one dicarboxylic acid, and
iii) at least one monocarboxylic acid,
c) water, and
d) a co-solvent.

2. The composition as claimed in claim 1, wherein the water-soluble pesticides of component a) are selected from the group of water-soluble herbicides, and preferably from the water-soluble salts of acifluorfen, aminopyralid, amitrole, asulam, benazolin, bentazone, bialaphos, bispyribac, bromacil, bromoxynil, bicyclopryon, chloramben, clopyralid, 2,4-D, 2,4-DB, dicamba, dichlorprop, difenzoquat, diquat, endothal, fenoxaprop, flamprop, flumiclorac, fluoroglycofen, fomesafen, fosamine, glufosinate, glyphosate, imazameth, imazamethabenz, imazamox, imazapic, imazapyr, imazaquin, imazethapyr, MCPA, MCPB, mecoprop, octanoic acid, paraquat, pelargonic acid, picloram, quizalofop, 2,3,6-TBA, and triclopyr.

3. The composition as claimed in claim 1 or 2, wherein the water-soluble pesticides of components a) are selected from the water-soluble salts of 2,4-D, bentazone, dicamba, fomesafen, glyphosate, glufosinate, MCPA, and paraquat.

4. The composition as claimed in claim 1 to 3, wherein component a) comprises precisely two water-soluble pesticides.

5. The composition as claimed in claim 4, wherein the water-soluble pesticides of component a) are the combinations of the two herbicides glyphosate and 2,4-D, glyphosate and dicamba, glyphosate and fomesafen, glyphosate and glufosinate, 2,4-D and dicamba, glufosinate and 2,4-D, or glufosinate and dicamba, and especially preferably are glyphosate and 2,4-D or glyphosate and dicamba.

6. The composition as claimed in claim 4 to 5, wherein the ratio of the two water-soluble herbicides in these combinations is between 9:1 and 1:9, preferably between 8:2 and 2:8, and more preferably between 7:3 and 3:7, based on the acid equivalents of the two water-soluble herbicides.

7. The composition as claimed in claim 1 to 6, wherein the one or more copolymers of component b) are selected from copolymers obtainable by copolymerizing
i) glycerol,
ii) at least one dicarboxylic acid, and
iii) at least one monocarboxylic acid as per formula (I)
R¹-COOH (I),
where R¹ is (C₅-C₂₉)-alkyl; (C₇-C₂₉)-alkenyl; phenyl; or naphthyl, and comprise 19.9 to 99 wt% of component i), 0.1 to 30 wt% of component ii), and 0.9 to 80 wt% of component iii).

8. The composition as claimed in claim 1 to 7, wherein the co-solvent d) is a polar solvent which is compatible with the aqueous pesticide composition and forms a homogeneous phase.

9. The composition as claimed in one or more of claims 1 to 8, wherein the total amount of the pesticides of component a) in the composition is greater than 100 g/l, preferably greater than 200 g/l, and more preferably greater than 300 g/l, based on their acid equivalent.

10. The composition as claimed in one or more of claims 1 to 9, wherein the amount of the copolymers of component b) in the composition is from 20 to 250 g/l and preferably from 50 to 200 g/l.

11. The composition as claimed in one or more of claims 1 to 10, which is phase-stable at a temperature of greater than 55°C, preferably of greater than 70°C, and more preferably of greater than 80°C.

12. The composition as claimed in one or more of claims 1 to 11, which is phase-stable at a temperature of less than 10°C, preferably of less than 0°C, and more preferably of less than -10°C.

13. The composition as claimed in one or more of claims 1 to 12, which comprises one or more agrochemical salts, preferably ammonium salts or potassium salts.

14. The composition as claimed in one or more of claims 1 to 13, which is present in the form of a concentrated formulation which is diluted prior to use, and which comprises 5 to 80 wt%, preferably 10 to 70 wt%, and more preferably 20 to 60 wt% of the one or more water-soluble pesticides of component a) and 1 to 25 wt%, preferably 2 to 20 wt%, and more preferably 3 to 15 wt% of the one or more copolymers of component b).

15. The composition as claimed in one or more of claims 1 to 14, which takes the form of a spray mixture and comprises 0.001 to 10 wt%, preferably 0.02 to 3 wt%, and more preferably 0.025 to 2 wt% of the one or more water-soluble pesticides of component a) and 0.001 to 3 wt%, preferably 0.005 to 1 wt%, and more preferably 0.01 to 0.5 wt% of the one or more copolymers of component b).

16. The use of a composition as claimed in one or more of claims 1 to 15 for controlling and/or combating weeds, fungal diseases, or insect infestation, preferably for controlling and/or combating weeds.

## Revendications

1. Composition contenant
a) au moins deux pesticides solubles dans l'eau ayant une solubilité dans l'eau à 25°C d'au moins 50 g/l,
b) un ou plusieurs copolymères pouvant être obtenus par copolymérisation
i) de glycérol,
ii) d'au moins un acide dicarboxylique, et
iii) d'au moins un acide monocarboxylique,
c) de l'eau, et
d) un cosolvant.

2. Composition selon la revendication 1, **caractérisée en ce que** les pesticides solubles dans l'eau du composant a) sont choisis dans le groupe des herbicides solubles dans l'eau, et de préférence parmi les sels solubles de l'eau de l'acifluorfène, de l'aminopyralide, de l'amitrol, de l'asulam, de la bénazoline, du bentazon, du bialaphos, du bispyribac, du bromacil, du bromoxynil, du bicyclopyron, du chlorambène, du clopyralide, du 2,4-D, du 2,4-DB, du dicamba, du dichlorprop, du difenzoquat, du diquat, de l'endothal, du fénoxaprop, du flamprop, du flumiclorac, du fluoroglycofène, du fomésafène, de la fosamine, du glufosinate, du glyphosate, de l'imizameth, de l'imazaméthabenz, de l'imazamox, de l'imazapic, de l'imazapyr, de l'imazaquine, de l'imazéthapyr, du MCPA, du MCPB, du mécoprop, de l'acide octanoïque, du paraquat, de l'acide pélargonique, du piclorame, du quizalofop, du 2,3,6-TBA et du triclopyr.

3. Composition selon la revendication 1 ou 2, **caractérisée en ce que** les pesticides solubles dans l'eau du composant a) sont choisis parmi les sels solubles dans l'eau du 2,4-D, du bentazon, du dicamba, du fomésafène, du glyphosate, du glufosinate, du MCPA et du paraquat.

4. Composition selon les revendications 1 à 3, **caractérisée en ce que**, pour ce qui concerne le composant a), il s'agit exactement de deux pesticides solubles dans l'eau.

5. Composition selon la revendication 4, **caractérisée en ce que**, pour ce qui concerne les pesticides solubles dans l'eau du composant a), il s'agit des combinaisons des deux herbicides glyphosate et 2,4-D, glyphosate et dicamba, glyphosate et fomésafène, glyphosate et glufosinate, 2,4-D et dicamba, glufosinate et 2,4-D, ou glufosinate et dicamba, et d'une manière particulièrement préférée de glyphosate et 2,4-D ou glyphosate et dicamba.

6. Composition selon les revendications 4 à 5, **caractérisée en ce que** le rapport entre les deux herbicides solubles dans l'eau est, dans ces combinaisons, compris entre 9:1 et 1:9, de préférence entre 8:2 et 2:8 et d'une manière particulièrement préférée entre 7:3 et 3:7, par rapport aux équivalents acides des deux herbicides solubles dans l'eau.

7. Composition selon les revendications 1 à 6, **caractérisée en ce que** le ou les plusieurs copolymères du composant b) sont choisis parmi les copolymères pouvant être obtenus par copolymérisation
i) de glycérol,
ii) d'au moins un acide dicarboxylique, et
iii) d'au moins un acide monocarboxylique de formule (I)
R¹-COOH (I),
dans laquelle R¹ est un groupe alkyle en C₅-C₂₉ ; alcényle en C₇-C₂₉, phényle ou naphtyle, et contiennent 19,9 à 99 % en poids du composant i), 0,1 à 30 % en poids du composant ii) et 0,9 à 80 % en poids du composant iii).

8. Composition selon les revendications 1 à 7, **caractérisée en ce que** le cosolvant d) est un solvant polaire, qui est compatible avec la composition pesticide aqueuse et forme une phase homogène.

9. Composition selon l'une ou plusieurs des revendications 1 à 8, **caractérisée en ce que** la quantité totale des pesticides du composant a) dans la composition est supérieure à 100 g/l, de préférence supérieure à 200 g/l et d'une manière particulièrement préférée supérieure à 300 g/l, par rapport à leur équivalent acide.

10. Composition selon l'une ou plusieurs des revendications 1 à 9, **caractérisée en ce que** la quantité des copolymères du composant b) dans la composition est de 20 à 250 g/l et de préférence de 50 à 200 g/l.

11. Composition selon l'une ou plusieurs des revendications 1 à 10, **caractérisée en ce qu'**elle présente une stabilité phasique à une température supérieure à 55°C, de préférence supérieure à 70°C et d'une manière particulièrement préférée supérieure à 80°C.

12. Composition selon l'une ou plusieurs des revendications 1 à 11, **caractérisée en ce qu'**elle présente une stabilité phasique à une température inférieure à 10°C, de préférence inférieure à 0°C et d'une manière particulièrement préférée inférieure à -10°C.

13. Composition selon l'une ou plusieurs des revendications 1 à 12, **caractérisée en ce qu'**elle contient un ou plusieurs sels agrochimiques, de préférence des sels d'ammonium ou de potassium.

14. Composition selon l'une ou plusieurs des revendications 1 à 13, **caractérisée en ce qu'**elle se présente sous forme d'une formulation concentrée qui est diluée avant utilisation, et contient 5 à 80 % en poids, de préférence 10 à 70 % en poids et d'une manière particulièrement préférée 20 à 60 % en poids du ou des plusieurs pesticides solubles dans l'eau du composant a), et 1 à 25 % en poids, de préférence 2 à 20 % en poids et d'une manière particulièrement préférée 3 à 15 % en poids du ou des plusieurs copolymères du composant b).

15. Composition selon l'une ou plusieurs des revendications 1 à 14, **caractérisée en ce qu'**elle se présente sous forme d'une bouillie pour pulvérisation, et contient 0,001 à 10 % en poids, de préférence 0,02 à 3 % en poids et d'une manière particulièrement préférée 0,025 à 2 % en poids du ou des plusieurs pesticides solubles dans l'eau du composant a) et 0,001 à 3 % en poids, de préférence 0,005 à 1 % en poids et d'une manière particulièrement préférée 0,01 à 0,5 % en poids du ou des plusieurs copolymères du composant b).

16. Utilisation d'une composition selon l'une ou plusieurs des revendications 1 à 15 pour la maîtrise des mauvaises herbes, des maladies fongiques ou d'une infestation par des insectes, et/ou pour lutter contre ces dernières, de préférence pour la maîtrise des mauvaises herbes et/ou la lutte contre ces dernières.
